# EUROPÄISCHE PATENTSCHRIFT

(11) **EP 3 769 984 B1**
(45) Veröffentlichungstag und Bekanntmachung des Hinweises auf die Patenterteilung: **24.05.2023**
(21) Anmeldenummer: 19188189.5
(22) Anmeldetag: 24.07.2019
(51) Int. Cl.: B60H 1/00, B60P 3/20, B60H 1/32, B60L 1/00, B60L 53/14, B60L 53/24

(54) **TRANSPORTKÄLTEMASCHINE ZUM KÜHLEN EINES LADERAUMS EINES NUTZFAHRZEUGS**
TRANSPORT REFRIGERATING MACHINE FOR COOLING A LOAD SPACE OF A COMMERCIAL VEHICLE
MACHINE FRIGORIFIQUE DE TRANSPORT DESTINÉE À RÉFRIGÉRER UN ESPACE DE CHARGEMENT D'UN VÉHICULE UTILITAIRE

(43) Veröffentlichungstag der Anmeldung: 27.01.2021
(73) Patentinhaber: Schmitz Cargobull AG, 48341 Altenberge (DE)
(72) Erfinder: Wantia, Sebastian, 48691 Vreden (DE)
(74) Vertreter: Cohausz & Florack

(56) Entgegenhaltungen:
- EP-A1- 1 512 565
- WO-A1-2018/226389
- DE-A1-102010 003 509
- JP-A- 2003 341 414
- KR-A- 20150 029 883
- US-A1- 2017 349 078

## Beschreibung

### Gebiet

Die Erfindung betrifft eine Transportkältemaschine zum Kühlen eines Laderaums eines Nutzfahrzeugs.

### Hintergrund

Eine solche Transportkältemaschine wie sie etwa in US2017/349078A1 beschrieben ist, kann beispielsweise gekühlte Luft erzeugen, die in den Laderaum des Nutzfahrzeugs geblasen wird. Zu diesem Zweck kann die Transportkältemaschine einen Kühlkreis mit einem durch einen elektrischen Motor angetriebenen Verdichter zum Verdichten eines Kühlmittels, einen Kondensator, eine Drosseleinrichtung und einen Wärmetauscher umfassen. In dem Kühlkreis strömt das von dem Verdichter verdichtete Kältemittel über den Kondensator und eine in Strömungsrichtung hinter dem Kondensator angeordnete Drosseleinrichtung, die beispielsweise als Stellventil ausgebildet sein kann, zu dem Wärmetauscher. In dem Wärmetauscher wird das zuvor verflüssigte Kältemittel expandiert und entzieht dabei einem getrennt von dem Kältemittel durch den Wärmetauscher geleiteten Luftstrom Wärme, so dass die Luft des Luftstroms gekühlt wird. Die gekühlte Luft dieses Luftstroms wird anschließend in den Laderaum des Nutzfahrzeugs geblasen, um diesen zu kühlen.

Häufig wird der elektrischen Motor einer solchen Transportkältemaschine, wenn das Nutzfahrzeug fährt, von einem Generator, der von einem in einem optimalen Betriebspunkt laufenden Verbrennungsmotor angetrieben wird, mit elektrischer Energie versorgt wird. Um die Emissionen des Nutzfahrzeugs zu reduzieren, ist in der letzten Zeit das Bedürfnis entstanden, den Verbrennungsmotor einer solchen Transportkältemaschine durch einen elektrischen Energiespeicher zu ersetzen, der den elektrischen Motor mit Energie versorgen kann (z.B. wenn das Nutzfahrzeug fährt) und von einer externen Energiequelle wie einem öffentlichen Energieversorgungsnetz aufgeladen werden kann (z.B. wenn das Nutzfahrzeug abgestellt ist).

In JP2003341414A wird ebenfalls eine Transportkältemaschine beschrieben. Bei dieser wird die Ladeleistung für die Batterie reduziert wird, wenn die Generatorleistung reduziert ist.

### Zusammenfassung einiger beispielhafter Ausführungsformen der Erfindung

Eine Aufgabe der vorliegenden Erfindung ist es daher, eine Transportkältemaschine der eingangs genannten und zuvor näher erläuterten Art derart auszugestalten und weiterzubilden, dass der elektrischen Motor der Transportkältemaschinen von einem elektrischen Energiespeicher mit Energie versorgt werden kann und der elektrische Energiespeicher von einer externen Energiequelle geladen werden kann.

Gemäß der Erfindung wird eine Transportkältemaschine zum Kühlen eines Laderaums eines Nutzfahrzeugs offenbart, wobei die Transportkältemaschine einen Motor und eine Spannungswandlervorrichtung umfasst, wobei elektrische Energie zum Betreiben des elektrischen Motors in einem ersten Betriebszustand der Transportkältemaschine durch einen elektrischen Energiespeicher des Nutzfahrzeugs bereitgestellt wird, wobei elektrische Energie zum Betreiben des elektrischen Motors und zum Laden des elektrischen Energiespeichers in einem zweiten Betriebszustand der Transportkältemaschine durch eine externe elektrische Energiequelle bereitgestellt wird, und wobei die Spannungswandlervorrichtung eingerichtet ist:
- in dem ersten Betriebszustand der Transportkältemaschine eine durch den elektrischen Energiespeicher des Nutzfahrzeugs bereitgestellte Gleichspannung in eine Dreiphasenwechselspannung zum Betreiben des elektrischen Motors umzuwandeln,
- in dem zweiten Betriebszustand der Transportkältemaschine eine durch die externe elektrische Energiequelle bereitgestellte Dreiphasenwechselspannung in eine Gleichspannung zum Laden des elektrischen Energiespeichers umzuwandeln und die zum Laden des elektrischen Energiespeichers verfügbare elektrische Leistung derart zu beschränken, dass der elektrische Motor die zum Betreiben des elektrischen Motors notwendige elektrische Leistung erhält.

Im Folgenden werden die Eigenschaften der offenbarten Transportkältemaschine - teilweise beispielhaft - beschrieben.

Ein Nutzfahrzeug ist zum Beispiel ein Lastkraftwagen, ein Anhänger oder ein Sattelauflieger. Nutzfahrzeuge sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von temperaturempfindlichen Gütern, also beispielsweise für den sogenannten Kühltransport geeignet. Damit die Temperatur solcher temperaturempfindlichen Güter einen von den Gütern abhängigen Grenzwert während eines solchen Kühltransports nicht übersteigt, wird der Laderaum des Nutzfahrzeugs gekühlt. Zu diesem Zweck kann die offenbarte Transportkältemaschine in dem Nutzfahrzeug (z.B. in und/oder an dem Kofferaufbau des Nutzfahrzeugs) eingesetzt werden.

Die Transportkältemaschine kann Teil des Nutzfahrzeugs sein und/oder zur Montage in dem Nutzfahrzeug (z.B. in und/oder an einem Kofferaufbau des Nutzfahrzeugs) vorgesehen sein.

Dass die Transportkältemaschine zum Kühlen des Laderaums des Nutzfahrzeugs ist, soll beispielsweise derart verstanden werden, dass die Transportkältemaschine zum Kühlen des Laderaums des Nutzfahrzeugs ausgebildet ist. Zu diesem Zweck kann die Transportkältemaschine, wie oben offenbart, einen Kühlkreis mit einem Verdichter zum Verdichten eines Kühlmittels, einen Kondensator, eine Drosseleinrichtung und einen Wärmetauscher umfassen. Zum Beispiel kann das Kühlen des Laderaums des Nutzfahrzeugs durch die Transportkältemaschine erfolgen, indem die Transportkältemaschine Luft eines durch den Wärmetauscher geleiteten Luftstroms kühlt und anschließend in den Laderaum des Nutzfahrzeugs bläst.

Es versteht sich, dass die Transportkältemaschine neben dem elektrischen Motor und der Spannungswandlervorrichtung noch weitere Komponenten wie einen Kühlkreis mit einem Verdichter zum Verdichten eines Kühlmittels, einen Kondensator, eine Drosseleinrichtung und einen Wärmetauscher umfassen kann. Wie oben offenbart, kann der elektrische Motor einen Verdichter eines solchen Kühlkreises antreiben.

Eine elektrische Energiequelle (z.B. die externe elektrische Energiequelle, der elektrische Energiespeicher und/oder der unten offenbarte elektrische Generator) versorgt eine angeschlossene Last (z.B. den elektrischen Motor und/oder den elektrischen Energiespeicher) mit einer Spannung (z.B. einer Gleichspannung oder einer Wechselspannung) und einem Strom (z.B. einem Gleichstrom oder einem Wechselstrom). Ein Beispiel für eine solche elektrische Energiequelle ist eine Spannungsquelle, die im Idealfall eine von der angeschlossenen Last unabhängige Spannung und einen von der angeschlossenen Last abhängigen Strom bereitstellt. Ein weiteres Beispiel für eine solche elektrische Energiequelle ist eine Stromquelle, die im Idealfall einen von der angeschlossenen Last unabhängigen Strom und eine von der angeschlossenen Last abhängige Spannung bereitstellt. Die von der elektrischen Energiequelle zu einem bestimmten Zeitpunkt bereitgestellte elektrische Leistung ist eine Funktion der durch die elektrische Energiequelle zu diesem Zeitpunkt bereitgestellten Spannung und des durch die elektrische Energiequelle zu diesem Zeitpunkt bereitgestellten Stroms und entspricht, wenn die bereitgestellte Spannung eine Gleichspannung und/oder der bereitgestellte Strom ein Gleichstrom ist, dem Produkt der bereitgestellten Spannung und des bereitgestellten Stroms. Die durch die elektrische Energiequelle über einen bestimmten Zeitraum bereitgestellte elektrische Energie ist eine Funktion der durch die elektrische Energiequelle in diesem Zeitraum bereitgestellten elektrischen Leistung und entspricht, wenn die bereitgestellte elektrische Leistung in diesem Zeitraum konstant ist, dem Produkt der bereitgestellten elektrischen Leistung und der Zeitspanne dieses Zeitraums.

Dementsprechend soll unter dem Bereitstellen einer Energie zum Betreiben einer angeschlossenen Last (z.B. zum Betreiben des elektrischen Motors und/oder zum Laden des elektrischen Energiespeichers) durch eine Energiequelle (z.B. die externe elektrische Energiequelle, den elektrischen Energiespeicher und/oder den unten offenbarten elektrischen Generator) beispielsweise verstanden werden, dass die Energiequelle eine Spannung (z.B. eine Gleichspannung oder eine Wechselspannung) und einen Strom (z.B. eine Gleichstrom oder eine Wechselstrom) zum Betreiben der angeschlossenen Last (z.B. zum Betreiben des elektrischen Motors und/oder zum Laden des elektrischen Energiespeichers) bereitstellt.

Die Transportkältemaschine wird erfindungsgemäß zumindest in einem ersten Betriebszustand und in einem zweiten Betriebszustand betrieben. In dem ersten Betriebszustand der Transportkältemaschine wird elektrische Energie zum Betreiben des elektrischen Motors durch den elektrischen Energiespeicher des Nutzfahrzeugs bereitgestellt; und in dem zweiten Betriebszustand der Transportkältemaschine wird elektrische Energie zum Betreiben des elektrischen Motors und zum Laden des elektrischen Energiespeichers durch die externe elektrische Energiequelle bereitgestellt.

Zum Beispiel kann das Nutzfahrzeug im ersten Betriebszustand der Transportkältemaschine nicht mit der externen elektrischen Energiequelle verbunden werden, z.B. weil sich das Nutzfahrzeug in Fahrt befindet oder keine externe elektrischen Energiequelle in der Nähe ist. Im zweiten Betriebszustand ist das Nutzfahrzeug beispielsweise abgestellt und mit der externen elektrischen Energiequelle verbunden.

Im Folgenden wird zur Vereinfachung stellenweise nur auf die durch eine jeweilige elektrische Energiequelle (z.B. die externe elektrische Energiequelle, den elektrischen Energiespeicher und/oder den unten offenbarten elektrischen Generator) bereitgestellte Spannungsart (d.h. Gleichspannung oder Wechselspannung) und die zum Betreiben einer jeweiligen Last (z.B. zum Betreiben des elektrischen Motors und/oder zum Laden des elektrischen Energiespeichers) notwendige Spannungsart (d.h. Gleichspannung oder Wechselspannung) Bezug genommen. Dies soll jedoch als Offenbarung dafür verstanden werden, dass die jeweilige elektrische Energiequelle einen Strom der korrespondierenden Stromart (d.h. Gleichstrom oder Wechselstrom) bereitstellt und zum Betreiben der jeweiligen Last ein Strom der korrespondierenden Stromart (d.h. Gleichstrom oder Wechselstrom) notwendig ist.

Der elektrische Motor der Transportkältemaschine ist ein Drehstrommotor. Zum Betreiben eines solchen Drehstrommotors ist eine Dreiphasenwechselspannung notwendig. Ein Beispiel für einen solchen Drehstrommotor ist ein Drehstrom-Asynchronmotor oder ein Drehstrom-Synchronmotor.

Der elektrische Energiespeicher stellt eine Gleichspannung bereit. Ferner ist zum Laden des elektrischen Energiespeichers eine Gleichspannung notwendig. Ein Beispiel für einen solchen elektrischen Energiespeicher ist eine aufladbare Batterie wie eine aufladbare Hochvoltbatterie (z.B. in Form einer Metall-Hydrid-Batterie oder einer Lithium-Ionen-Batterie). Der elektrische Energiespeicher ist Teil des Nutzfahrzeugs. Es versteht sich, dass der elektrische Energiespeicher zusätzlich Teil der Transportkältemaschine sein kann. Alternativ kann der elektrische Energiespeicher auch extern von der Transportkältemaschine sein.

Die externe elektrische Energiequelle stellt eine Dreiphasenwechselspannung bereit. Die externe elektrische Energiequelle ist extern zu der Transportkältemaschine und dem Nutzfahrzeug (d.h. sie ist kein Teil der Transportkältemaschine und des Nutzfahrzeugs). Ein Beispiel für eine solche externe elektrische Energiequelle ist ein elektrisches Energieversorgungsnetz, insbesondere eine öffentliches elektrisches Energieversorgungsnetz.

Die Spannungswandlervorrichtung dient zum Wandeln der durch die jeweilige elektrische Energiequelle bereitgestellten Spannung und/oder Spannungsart in die zum Betreiben der jeweiligen Last notwendige Spannung und/oder Spannungsart.

Zu diesem Zweck ist die Spannungswandlervorrichtung eingerichtet, (1) die durch den elektrischen Energiespeicher des Nutzfahrzeugs in dem ersten Betriebszustand der Transportkältemaschine bereitgestellte Gleichspannung in eine Dreiphasenwechselspannung zum Betreiben des elektrischen Motors umzuwandeln und (2) die durch die externe elektrische Energiequelle in dem zweiten Betriebszustand der Transportkältemaschine bereitgestellte Dreiphasenwechselspannung in eine Gleichspannung zum Laden des elektrischen Energiespeichers umzuwandeln.

Die Spannungswandlervorrichtung erhält im ersten Betriebszustand die durch den elektrischen Energiespeicher bereitgestellte Gleichspannung und gibt eine Dreiphasenwechselspannung zum Betreiben des elektrischen Motors aus, wohingegen sie im zweiten Betriebszustand eine Dreiphasenwechselspannung erhält und eine Gleichspannung zum Laden des elektrischen Energiespeichers ausgibt. Dementsprechend soll die Spannungswandlervorrichtung als bidirektionale Spannungswandlervorrichtung verstanden werden, die Spannungen in beide Richtungen (d.h. eine Gleichspannung in eine Wechselspannung und eine Wechselspannung in eine Gleichspannung) wandeln kann.

Erfindungsgemäß kann der elektrische Motor mit der durch die externe elektrische Energiequelle in dem zweiten Betriebszustand der Transportkältemaschine bereitgestellten Dreiphasenwechselspannung betrieben werden, so dass die durch die externe elektrische Energiequelle in dem zweiten Betriebszustand der Transportkältemaschine bereitgestellten Dreiphasenwechselspannung zum Betreiben des elektrischen Motors gemäß der Erfindung nicht durch die Spannungswandlervorrichtung umgewandelt wird. Erfindungsgemäß ist der elektrische Motor parallel zu der Spannungswandlervorrichtung und dem elektrischen Energiespeicher verschaltet, so dass sowohl über die Spannungswandlervorrichtung und den elektrischen Energiespeicher als auch über den elektrischen Motor die durch die externe elektrische Energiequelle in dem zweiten Betriebszustand der Transportkältemaschine bereitgestellte Dreiphasenwechselspannung abfällt.

In dem zweiten Betriebszustand der Transportkältemaschine stellt die externe elektrische Energiequelle elektrische Energie zum Betreiben des elektrischen Motors und zum Laden des elektrischen Energiespeichers bereit.

Dass der elektrische Motor im zweiten Betriebszustand der Transportkältemaschine die zum Betreiben des elektrischen Motors notwendige elektrische Leistung erhält, soll beispielsweise derart verstanden werden, dass vorrangig elektrische Leistung zum Betreiben des elektrische Motor in dem zweiten Betriebszustand verwendet wird und nur dann elektrische Leistung zum Laden des elektrischen Energiespeichers verwendet wird, wenn die externe elektrische Energiequelle zusätzliche (d.h. über die zum Betreiben des elektrischen Motors notwendige elektrische Leistung hinausgehende) elektrische Leistung bereitstellen kann. Zu diesem Zweck ist die Spannungswandlervorrichtung eingerichtet, die zum Laden des elektrischen Energiespeichers verfügbare elektrische Leistung derart zu beschränken, dass der elektrische Motor die zum Betreiben des elektrischen Motors notwendige elektrische Leistung erhält. Zum Beispiel kann der Spannungswandler den zum Laden des elektrischen Energiespeichers zur Verfügung stehenden Gleichstrom und/oder die zum Laden des elektrischen Energiespeichers zur Verfügung stehende Gleichspannung derart begrenzen, dass der elektrische Motor im zweiten Betriebszustand der Transportkältemaschine die zum Betreiben des elektrischen Motors notwendige elektrische Leistung erhält (zumindest solange die externe elektrische Energiequelle die zum Betreiben des elektrischen Motors notwendige elektrische Leistung bereitstellen kann). Dies ist beispielsweise vorteilhaft, um ein gleichzeitiges Betreiben des elektrischen Motors und Laden des elektrischen Energiespeichers zu ermöglichen, ohne dass die Gefahr besteht, dass der Leistungsbedarf des elektrischen Motors nicht gedeckt werden kann, weil ein zu großer Teil der zur Verfügung stehenden elektrischen Leistung zum Laden des elektrischen Energiespeichers verwendet wird. Mit anderen Worten schließen sich hierdurch das Betreiben des elektrischen Motors und das Laden des elektrischen Energiespeichers nicht aus, solange die durch die externe elektrische Energiequelle bereitgestellte elektrische Leistung hierfür ausreicht.

Das Beschränken der zum Laden des elektrischen Energiespeichers verfügbaren elektrischen Leistung durch die Spannungswandlervorrichtung erfolgt erfindungsgemäß in Abhängigkeit eines elektrischen Leistungsbedarfs des elektrischen Motors.

Dieser Leistungsbedarf kann beispielsweise an die Spannungswandlervorrichtung (z.B. eine Steuereinheit der Spannungswandlervorrichtung) kommuniziert werden (z.B. von einer Steuereinheit des elektrischen Motors).

Ferner kann das Beschränken der zum Laden des elektrischen Energiespeichers verfügbaren elektrischen Leistung durch die Spannungswandlervorrichtung beispielsweise in Abhängigkeit der maximalen elektrischen Leistung, die die externe elektrische Energiequelle bereitstellen kann, erfolgen. Diese maximale elektrische Leistung kann beispielsweise vorgegeben sein und/oder an die Spannungswandlervorrichtung (z.B. eine Steuereinheit der Spannungswandlervorrichtung) kommuniziert werden (z.B. von der externen elektrischen Energiequelle).

Erfindungsgemäß ist der elektrische Motor in dem zweiten Betriebszustand parallel zu der Spannungswandlervorrichtung und dem elektrischen Energiespeicher verschaltet. Aufgrund dieser Parallelschaltung fällt sowohl über die Spannungswandlervorrichtung und den elektrischen Energiespeicher als auch über den elektrischen Motor die durch die externe elektrische Energiequelle in dem zweiten Betriebszustand der Transportkältemaschine bereitgestellte Dreiphasenwechselspannung ab. Dementsprechend kann die Spannungswandlervorrichtung die zum Laden des elektrischen Energiespeichers verfügbare elektrische Leistung beispielsweise durch eine Beschränkung des durch die Spannungswandlervorrichtung erhaltenen Eingangsstroms und/oder des durch die Spannungswandlervorrichtung ausgegebenen Ausgangsstroms beschränken.

In beispielhaften Ausführungsformen der Erfindung umfasst die Spannungswandlervorrichtung einen ersten Verbindungsknoten zum Herstellen einer elektrischen Verbindung mit dem elektrischen Motor und/oder der externen elektrischen Energiequelle und einen zweiten Verbindungsknoten zum Herstellen einer elektrischen Verbindung mit dem elektrischen Energiespeicher.

Dabei soll unter einer elektrischen Verbindung eine Verbindung verstanden werden, über die elektrische Energie übertragen werden kann. Ein Beispiel für eine solche elektrische Verbindung ist eine elektrische Leitung, die bei Gleichspannung und/oder Gleichstrom beispielsweise zwei elektrische Leiter und bei Dreiphasenwechselspannung und/oder Dreiphasenwechselstrom beispielsweise drei bis fünf elektrische Leiter (z.B. drei Außenleiter und, optional, einen PEN-Leiter oder einen Schutzleiter und einen Neutralleiter) aufweisen kann. Der erste und zweite Verbindungsknoten können dementsprechend beispielsweise als Anschlüsse für eine solche elektrische Leitung (z.B. mit zwei Leitern und/oder mit drei bis fünf Leitern) ausgebildet sein.

Erfindungsgemäß ist die Spannungswandlervorrichtung eingerichtet:
- in dem ersten Betriebszustand die durch den elektrischen Energiespeicher des Nutzfahrzeugs bereitgestellte Gleichspannung an dem zweiten Verbindungsknoten zu erhalten und die Dreiphasenwechselspannung zum Betreiben des elektrischen Motors an dem ersten Verbindungsknoten auszugeben,
- in dem zweiten Betriebszustand die durch die externe elektrische Energiequelle bereitgestellte Dreiphasenwechselspannung an dem ersten Verbindungsknoten zu erhalten und die Gleichspannung zum Laden des elektrischen Energiespeichers an dem zweiten Verbindungsknoten auszugeben.

In beispielhaften Ausführungsformen der Erfindung ist die Spannungswandlervorrichtung eingerichtet, den elektrischen Motor von dem elektrischen Energiespeicher des Nutzfahrzeugs galvanisch zu trennen. Zum Beispiel sind der erste Verbindungsknoten der Spannungswandlervorrichtung und der zweite Verbindungsknoten der Spannungswandlervorrichtung galvanisch getrennt.

In beispielhaften Ausführungsformen der Erfindung umfasst die Spannungswandlervorrichtung eine Wechselrichterschaltung und eine Gleichspannungswandlerschaltung.

Zum Beispiel sind die Wechselrichterschaltung und die Gleichspannungswandlerschaltung zwischen dem ersten Verbindungsknoten und dem zweiten Verbindungsknoten angeordnet. Dies soll beispielsweise derart verstanden werden, dass die Wechselrichterschaltung und die Gleichspannungswandlerschaltung Teil einer elektrischen Verbindung zwischen dem ersten Verbindungsknoten und dem zweiten Verbindungsknoten sind. Zum Beispiel kann über eine solche elektrische Verbindung elektrische Energie zwischen dem ersten Verbindungsknoten und dem zweiten Verbindungsknoten übertragen werden.

Die Gleichspannungswandlerschaltung und die Wechselrichterschaltung können bidirektionale ausgebildet sein. Dies soll derart verstanden werden, (1) dass über die Gleichspannungswandlerschaltung und die Wechselrichterschaltung elektrische Energie in beide Richtungen (d.h. von dem ersten Verbindungsknoten zu dem zweiten Verbindungsknoten und von dem zweiten Verbindungsknoten zu dem ersten Verbindungsknoten) übertragen werden kann und/oder (2) dass durch die Gleichspannungswandlerschaltung und die Wechselrichterschaltung Spannungen in beide Richtungen (d.h. eine am zweiten Verbindungsknoten erhaltene Gleichspannung in eine Dreiphasenwechselspannung und eine am ersten Verbindungsknoten erhaltene Dreiphasenwechselspannung in eine Gleichspannung) umgewandelt werden können.

Die Gleichspannungswandlerschaltung kann beispielsweise einen Transformator umfassen. Der Transformator ist beispielsweise derart verschaltet, dass der erste Verbindungsknoten der Spannungswandlervorrichtung und der zweite Verbindungsknoten der Spannungswandlervorrichtung galvanisch getrennt sind.

Die Wechselrichterschaltung umfasst beispielsweise einen Vierquadrantensteller und/oder mehrere Transistoren in Brückenschaltung(en) (z.B. in einer H-Brückenschaltung). Ein Beispiel für solche Transistoren ist ein Bipolartransistor mit isolierter Gate-Elektrode (IGBT) oder ein Metall-Oxid-Halbleiter-Feldeffekttransistor (MOSFET).

In beispielhaften Ausführungsformen der Erfindung kann die Transportkältemaschine zusätzlich zu dem ersten Betriebszustand und dem zweiten Betriebszustand auch in einem dritten Betriebszustand betrieben werden. In dem dritten Betriebszustand der Transportkältemaschine wird die elektrische Energie zum Betreiben des elektrischen Motors und/oder zum Laden des elektrischen Energiespeichers durch einen elektrischen Generator des Nutzfahrzeugs bereitgestellt.

Der elektrische Generator stellt eine Wechselspannung bereit. Die durch den Generator bereitgestellte Wechselspannung ist beispielsweise eine Einphasenwechselspannung oder eine Dreiphasenwechselspannung. Der elektrische Generator ist Teil des Nutzfahrzeugs. Ein Beispiel für einen solchen elektrischen Generator ist ein Achsgenerator, der durch die Drehung einer Achse des Nutzfahrzeugs angetrieben wird und dementsprechend elektrische Energie erzeugt und/oder erzeugen kann, wenn sich das Nutzfahrzeug in Fahrt befindet.

Das Nutzfahrzeug befindet sich im dritten Betriebszustand der Transportkältemaschine beispielsweise in Fahrt.

Wie oben offenbart, dient die Spannungswandlervorrichtung zum Wandeln der durch die jeweilige elektrische Energiequelle bereitgestellten Spannung und/oder Spannungsart in die zum Betreiben der jeweiligen Last notwendige Spannung und/oder Spannungsart. Zu diesem Zweck ist die Spannungswandlervorrichtung im Hinblick auf den dritten Betriebszustand der Transportkältemaschine beispielsweise eingerichtet, die in dem dritten Betriebszustand der Transportkältemaschine durch den elektrischen Generator des Nutzfahrzeugs bereitgestellte Wechselspannung in eine Gleichspannung zum Laden des elektrischen Energiespeichers und/oder eine Dreiphasenwechselspannung zum Betreiben des elektrischen Motors umzuwandeln.

Die Spannungswandlervorrichtung erhält im dritten Betriebszustand die durch den elektrischen Generator bereitgestellte Wechselspannung und gibt Gleichspannung zum Laden des elektrischen Energiespeichers und/oder eine Dreiphasenwechselspannung zum Betreiben des elektrischen Motors aus.

Zum Beispiel umfasst die Spannungswandlervorrichtung einen dritten Verbindungsknoten zum Herstellen einer elektrischen Verbindung mit dem elektrischen Generator des Nutzfahrzeugs. Dabei soll, wie oben offenbart, unter einer elektrischen Verbindung eine Verbindung wie eine elektrische Leitung verstanden werden, über die elektrische Energie übertragen werden kann. Der dritte Verbindungsknoten kann dementsprechend beispielsweise als Anschluss für eine solche elektrische Leitung (z.B. mit zwei Leitern und/oder mit drei bis fünf Leitern) ausgebildet sein.

Zum Beispiel ist die Spannungswandlervorrichtung eingerichtet, die durch den elektrischen Generator des Nutzfahrzeugs in dem dritten Betriebszustand der Transportkältemaschine bereitgestellte Wechselspannung an dem dritten Verbindungsknoten zu erhalten und die Gleichspannung zum Laden des elektrischen Energiespeichers an dem zweiten Verbindungsknoten und/oder die Dreiphasenwechselspannung zum Betreiben des elektrischen Motors an dem ersten Verbindungsknoten auszugeben.

In beispielhaften Ausführungsformen der Erfindung umfasst die Spannungswandlervorrichtung eine Gleichrichterschaltung. Zum Beispiel ist die Gleichrichterschaltung zwischen dem zweiten Verbindungsknoten und dem dritten Verbindungsknoten und/oder zwischen dem ersten Verbindungsknoten und dem dritten Verbindungsknoten angeordnet. Dies soll beispielsweise derart verstanden werden, dass die Gleichrichterschaltung Teil einer elektrischen Verbindung zwischen dem dritten Verbindungsknoten und dem zweiten Verbindungsknoten und/oder zwischen dem dritten Verbindungsknoten und dem ersten Verbindungsknoten ist. Zum Beispiel kann über eine solche elektrische Verbindung elektrische Energie zwischen dem dritten Verbindungsknoten und dem zweiten Verbindungsknoten und/oder zwischen dem dritten Verbindungsknoten und dem ersten Verbindungsknoten übertragen werden.

Die Wechselrichterschaltung umfasst beispielsweise mehrere Dioden in Brückenschaltung(en).

In beispielhaften Ausführungsformen der Erfindung umfasst die Spannungswandlervorrichtung eine Steuereinheit, wobei die Steuereinheit eingerichtet ist, die Funktion der Spannungswandlervorrichtung entsprechend dem jeweiligen Betriebszustand der Transportkältemaschine zu steuern. Zu diesem Zweck kann die Steuereinheit beispielsweise die Wechselrichterschaltung und/oder die Gleichspannungsschaltung und/oder die Gleichrichterschaltung der Spannungswandlervorrichtung ansteuern.

Zum Beispiel ist die Steuereinheit eingerichtet, die Wechselrichterschaltung und/oder die Gleichspannungsschaltung und/oder die Gleichrichterschaltung der Spannungswandlervorrichtung im ersten und/oder dritten Betriebszustand derart anzusteuern, dass die/der durch die Spannungswandlervorrichtung im ersten und/oder dritten Betriebszustand ausgegebene Dreiphasenspannung/Dreiphasenstrom zum Betreiben des elektrischen Motors einer/m vorgegebenen Dreiphasenspannung/Dreiphasenstrom und/oder einer Anforderung des elektrischen Motors (z.B. eine Anforderung einer bestimmten Dreiphasenspannung/Dreiphasenstrom) entspricht. Die Steuereinheit kann beispielsweise mit dem elektrischen Motor (z.B. einer Steuereinheit des elektrischen Motors) kommunizieren, um die Anforderung des elektrischen Motors erfassen zu können. Die/der vorgegebene Dreiphasenspannung/Dreiphasenstrom kann beispielsweise in die Steuereinheit programmiert (z.B. in einem Speicher der Steuereinheit gespeichert) sein.

Alternativ oder zusätzlich ist die Steuereinheit beispielsweise eingerichtet, die Wechselrichterschaltung und/oder die Gleichspannungsschaltung und/oder die Gleichrichterschaltung der Spannungswandlervorrichtung im zweiten Betriebszustand derart anzusteuern, dass die zum Laden des elektrischen Energiespeichers verfügbare elektrischen Leistung derart beschränkt wird, dass der elektrische Motor die zum Betreiben des elektrischen Motors notwendige elektrische Leistung erhält. Wie oben offenbart, kann das Beschränken in Abhängigkeit eines elektrischen Leistungsbedarfs des elektrischen Motors und/oder in Abhängigkeit einer maximalen elektrischen Leistung, die die externe elektrische Energiequelle bereitstellen kann, erfolgen. Dementsprechend kann die Steuereinheit beispielsweise mit dem elektrischen Motor (z.B. einer Steuereinheit des elektrischen Motors) und/oder der externen elektrischen Energiequelle kommunizieren, um den elektrischen Leistungsbedarfs des elektrischen Motors und/oder die maximale elektrische Leistung, die die externe elektrische Energiequelle bereitstellen kann, zu erfassen.

Alternativ oder zusätzlich kann die Steuereinheit eingerichtet sein, die Wechselrichterschaltung und/oder die Gleichspannungsschaltung und/oder die Gleichrichterschaltung der Spannungswandlervorrichtung im zweiten und/oder dritten Betriebszustand derart anzusteuern, dass die/der durch die Spannungswandlervorrichtung im zweiten und/oder dritten Betriebszustand ausgegebene Gleichspannung /Gleichstrom zum Laden des elektrischen Energiespeichers den Vorgaben eines Ladeprograms und/oder einer Anforderung des elektrischen Energiespeichers genügt. Ein solches Ladeprogramm oder eine solche Anforderung des elektrischen Energiespeichers kann beispielsweise eine oder mehrere Spannungen und/oder Ströme oder eine Abfolge mehrerer Spannungen und/oder Ströme zum Laden des elektrischen Energiespeichers vorgeben. Die Steuereinheit kann beispielsweise mit dem elektrischen Energiespeicher kommunizieren, um die Anforderung des elektrischen Energiespeichers erfassen zu können. Das Ladeprogramm kann beispielsweise in die Steuereinheit programmiert (z.B. in einem Speicher der Steuereinheit gespeichert) sein.

In beispielhaften Ausführungsformen der Erfindung ist die externe elektrische Energiequelle ein elektrisches Energieversorgungsnetz, insbesondere ein öffentliches elektrisches Energieversorgungsnetz.

In beispielhaften Ausführungsformen der Erfindung ist der elektrische Energiespeicher des Nutzfahrzeugs eine aufladbare Batterie, insbesondere eine Metall-Hydrid-Batterie oder eine Lithium-lonen-Batterie.

In beispielhaften Ausführungsformen der Erfindung umfasst die Transportkältemaschine ferner zumindest eine der folgenden Komponenten:
- einen von dem elektrischen Motor angetriebenen Verdichter,
- einen Kondensator,
- eine Drosseleinrichtung, und
- einen Wärmetauscher.

Zum Beispiel umfasst die Transportkältemaschine alle diese Komponenten (d.h. einen von dem elektrischen Motor angetriebenen Verdichter, einen Kondensator, eine Drosseleinrichtung und einen Wärmetauscher), beispielsweise als Teil eines Kühlkreises der Transportkältemaschine.

In beispielhaften Ausführungsformen der Erfindung ist die Transportkältemaschine Teil eines Nutzfahrzeugs. Dementsprechend soll auch ein Nutzfahrzeug, insbesondere ein Lastkraftwagen, ein Anhänger oder ein Sattelauflieger mit einem Kofferaufbau, umfassend die Transportkältemaschine als offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Ins-besondere sollen Merkmale, die in den Figuren enthalten sind, keineswegs als not-wendiger Bestandteil der vorliegenden Erfindung erachtet werden.

Es zeigen:
- Fig. 1: eine schematische Darstellung einer beispielhaften Ausführungsform eines Nutzfahrzeugs gemäß der Erfindung;
- Fig. 2: eine schematische Darstellung einer beispielhaften Ausführungsform einer Transportkältemaschine gemäß der Erfindung.

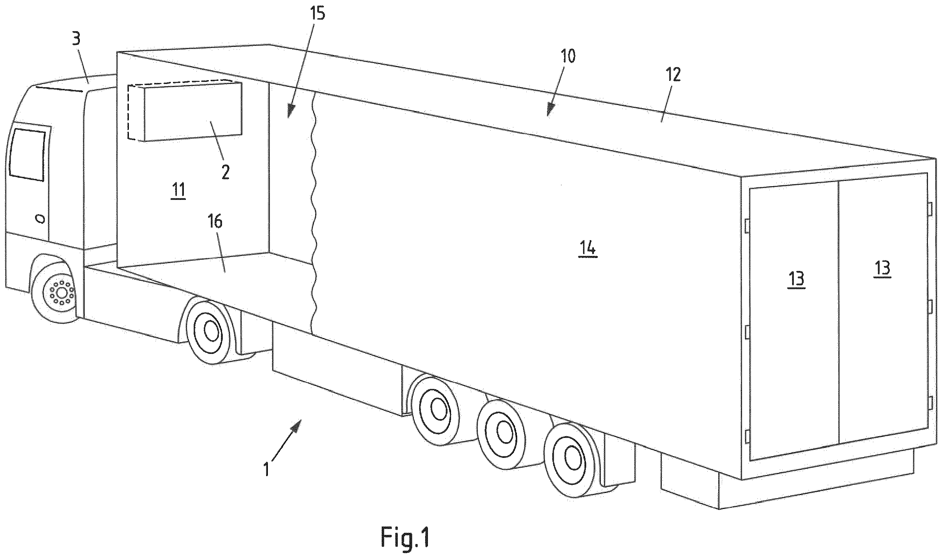

Fig. 1 ist eine schematische Darstellung einer beispielhaften Ausführungsform eines Nutzfahrzeugs 1 gemäß der Erfindung.

Das Nutzfahrzeug 1 ist ein Sattelauflieger 1 mit einem Kofferaufbau 10. Der Kofferaufbau 10 umfasst eine feste Stirnwand 11, ein festes Dach 12, eine durch Flügeltüren 13 gebildete Rückwand und feste Seitenwände 14. Der Kofferaufbau 10 umschließt dabei einen Laderaum 15 zur Aufnahme von zu transportierenden Gütern. Die vordere Seitenwand 14 ist in Fig. 1 teilweise weggelassen worden, um den Blick in den Laderaum 15, auf den Ladeboden 16 und auf die in der Stirnwand 11 montierte Transportkältemaschine 2 freizugeben, die lediglich schematisch dargestellt ist.

Die Transportkältemaschine 2 dient zum Kühlen des Laderaums 15, so dass temperaturempfindliche Güter in dem Laderaum 15 transportiert werden können. Zu diesem Zweck kann die Transportkältemaschine 2 beispielsweise Luft kühlen und anschließend in den Laderaum 15 blasen.

Ferner kann der Sattelauflieger einen elektrischen Generator 17 (nicht dargestellt) in Form eines Achsgenerators aufweisen, der durch die Drehung einer Achse des Sattelaufliegers 1 angetrieben wird und dementsprechend elektrische Energie in Form einer Wechselspannung (z.B. eine Dreiphasenwechselspannung mit einer Spannung in Höhe von 300V bis 540 V (z.B. 400 V) (Effektivwert der verketteten Spannungen)) erzeugt und/oder erzeugen kann, wenn sich der Sattelauflieger 1 in Fahrt befindet

Der Sattelauflieger 1 wird von einem Zugfahrzeug 3 gezogen.

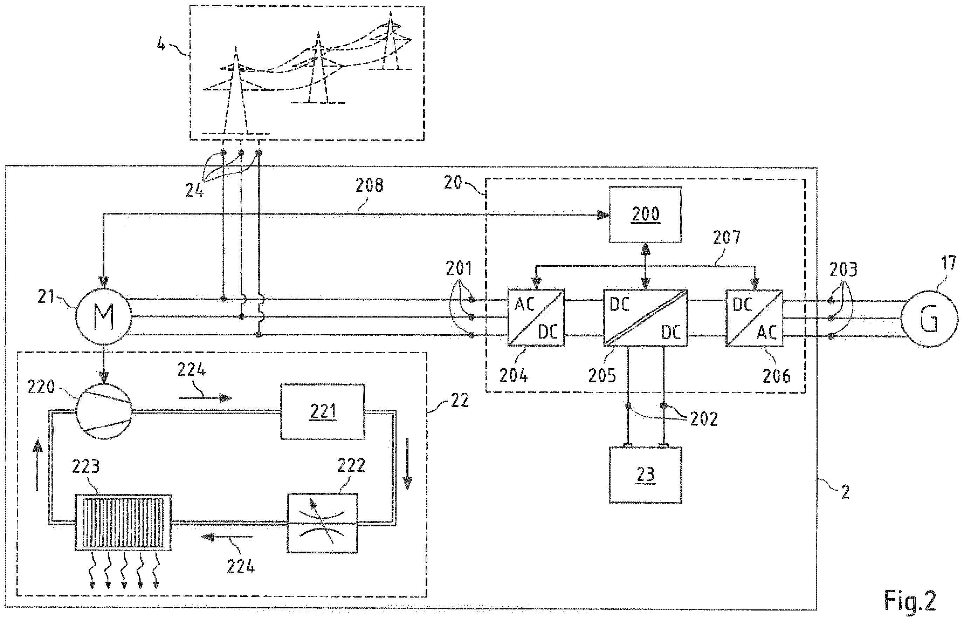

Fig. 2 eine schematische Darstellung einer beispielhaften Ausführungsform einer Transportkältemaschine 2 gemäß der Erfindung. Im Folgenden wird davon ausgegangen, dass die in Fig. 2 dargestellte Transportkältemaschine 2 der in Fig. 1 als Teil des Sattelaufliegers 1 gezeigten Transportkältemaschine 2 entspricht.

Die Transportkältemaschine 2 umfasst eine Spannungswandlervorrichtung 20, einen elektrischen Motor 21, einen schematisch dargestellten Kühlkreis 22 und einen elektrischen Energiespeicher 23 in Form einer Batterie.

Die Batterie 23 ist in Fig. 2 als Teil der Transportkältemaschine 2 dargestellt und somit auch Teil des Sattelaufliegers 1. Es versteht sich jedoch, dass die Batterie 23 gleichermaßen nur ein Teil des Sattelaufliegers 1 und kein Teil der Transportkältemaschine 2 sein kann. Die Batterie 23 stellt eine Gleichspannung (z.B. eine Gleichspannung mit einer Spannung von 500 V bis 800 V, z.B. nominal 650 V) bereit und wird mit einer Gleichspannung geladen.

Der Kühlkreis 22 umfasst einen durch den elektrischen Motor 21 angetriebenen Verdichter 220, einen Kondensator 221, eine Drosseleinrichtung 222 in Form eines Drosselventils und einem Wärmetauscher 223. In dem Kühlkreis 22 strömt das von dem Verdichter 220 verdichtete Kältemittel über den Kondensator 221 und das in Strömungsrichtung hinter dem Kondensator 221 angeordnete Drosselventil 222 zu dem Wärmetauscher 223. In dem Wärmetauscher 223 wird das zuvor verflüssigte Kältemittel expandiert und entzieht dabei einem getrennt von dem Kältemittel durch den Wärmetauscher 223 geleiteten Luftstrom Wärme, so dass die Luft des Luftstroms gekühlt wird. Die gekühlte Luft dieses Luftstroms wird anschließend beispielsweise in den Laderaum 15 des Sattelaufliegers 1 geblasen, um diesen zu kühlen. Die Strömungsrichtung des Kältemittels in dem Kühlkreis 22 ist durch die Pfeile 224 in Fig. 2 angedeutet.

Ferner kann die Transportkältemaschine über einen Anschluss 24 (z.B. in Form einer Steckdose wie einer Drehstromstreckdose) mit einer externen Energiequelle 4 elektrisch verbunden werden und ist über den Verbindungsknoten 203 mit dem Achsgenerator 17 des Sattelaufliegers 1 elektrisch verbunden. Dabei soll unter einer solchen elektrische Verbindung, wie oben offenbart, eine elektrische Verbindung verstanden werden, über die elektrische Energie übertragen (d.h. an der Transportkältemaschine erhalten) werden kann.

Die externe elektrische Energiequelle 4 ist in Fig. 4 in Form eines öffentlichen elektrischen Energieversorgungsnetzes dargestellt. Das öffentliche elektrische Energieversorgungsnetz stellt beispielsweise eine Dreiphasenwechselspannung mit einer Spannung in Höhe von 300V bis 540 V (z.B. 400 V) (Effektivwert der verketteten Spannungen) bereit.

Der elektrische Motor 21 der Transportkältemaschine 2 ist ein Drehstrommotor. Zum Betreiben des elektrischen Motors 21 ist eine Dreiphasenwechselspannung mit einer Spannung in Höhe von 300V bis 540 V (z.B. 400 V) (Effektivwert der verketteten Spannungen) notwendig.

Im Folgenden wird davon ausgegangen, dass die Transportkältemaschine 2 in einem ersten Betriebszustand, in einem zweiten Betriebszustand und in einem dritten Betriebszustand betrieben werden kann. In dem ersten Betriebszustand der Transportkältemaschine wird elektrische Energie zum Betreiben des elektrischen Motors 21 durch die Batterie 23 bereitgestellt; in dem zweiten Betriebszustand der Transportkältemaschine wird elektrische Energie zum Betreiben des elektrischen Motors 21 und zum Laden der elektrischen Batterie 23 durch das öffentliche elektrische Energieversorgungsnetz 4 bereitgestellt; und in dem dritten Betriebszustand wird elektrische Energie zum Betreiben des elektrischen Motors 21 und/oder zum Laden der elektrischen Batterie 23 durch den Achsgenerator 17 des Sattelaufliegers 1 bereitgestellt.

Wie sich unmittelbar aus Fig. 2 ergibt, ist der elektrische Motor 21 zu der Spannungswandlervorrichtung 20 und der Batterie 23 im zweiten Betriebszustand, wenn die elektrische Energie zum Betreiben des elektrischen Motors 21 und zum Laden der elektrischen Batterie 23 durch das öffentliche elektrische Energieversorgungsnetz 4 bereitgestellt wird, parallel verschaltet, so dass die durch das öffentliche elektrische Energieversorgungsnetz 4 am Anschluss 24 bereitgestellte Dreiphasenwechselspannung sowohl über den elektrischen Motor 21 als auch über die Spannungswandlervorrichtung 20 abfällt. Im ersten und dritten Betriebszustand liegt dagegen keine durch das öffentliche elektrische Energieversorgungsnetz 4 bereitgestellte Dreiphasenwechselspannung am Anschluss 24 an. Alternativ kann auch ein Schalter vorgesehen sein, der den Anschluss 24 im ersten und dritten Betriebszustand von dem elektrischen Motor 21 und dem Verbindungsknoten 201 trennt.

Die Spannungswandlervorrichtung dient zum Wandeln der durch die jeweilige elektrische Energiequelle 4, 17 und 23 in den verschiedenen Betriebszuständen bereitgestellte Spannung und/oder Spannungsart in die zum Betreiben des elektrischen Motors 21 und/oder zum Laden der Batterie 23 notwendige Spannung und/oder Spannungsart.

Die Spannungswandlervorrichtung 20 umfasst eine Steuereinheit 200, einen ersten Verbindungsknoten 201, einen zweiten Verbindungsknoten 202 und einen dritten Verbindungsknoten 203.

Über den Verbindungsknoten 201 ist die Spannungswandlervorrichtung mit dem elektrischen Motor und, wenn das öffentliche elektrische Energieversorgungsnetz 4 an dem Anschluss 24 angeschlossen ist, mit dem öffentlichen elektrischen Energieversorgungsnetz 4 elektrisch verbunden, so dass sie an dem Verbindungsknoten 201 eine durch das öffentliche elektrische Energieversorgungsnetz 4 bereitgestellte Dreiphasenwechselspannung erhalten und eine Dreiphasenwechselspannung zum Betreiben des elektrischen Motors 21 ausgeben kann.

Ferner ist die Spannungswandlervorrichtung 20 über den Verbindungsknoten 202 mit der Batterie 23 verbunden, so dass sie an dem Verbindungsknoten 202 eine durch die Batterie 23 bereitgestellte Gleichspannung erhalten und eine Gleichspannung zum Laden der Batterie 23 ausgeben kann.

Außerdem ist die Spannungswandlervorrichtung 20 über den Verbindungsknoten 203 mit dem Achsgenerator 17 verbunden, so dass sie an dem Verbindungsknoten 203 eine durch den Achsgenerator 17 bereitgestellte Wechselspannung erhalten kann.

Ferner umfasst die Spannungswandlervorrichtung eine Wechselrichterschaltung 204, eine Gleichspannungswandlerschaltung 205 und eine Gleichrichterschaltung 206.

Die Wechselrichterschaltung 204 und die Gleichspannungswandlerschaltung 205 sind Teil einer elektrischen Verbindung zwischen dem ersten Verbindungsknoten 201 und dem zweiten Verbindungsknoten 202; und die Gleichrichterschaltung 206 und die Gleichspannungswandlerschaltung 205 sind Teil einer elektrischen Verbindung zwischen dem dritten Verbindungsknoten 203 und dem zweiten Verbindungsknoten 202.

Die Gleichrichterschaltung 206 ist beispielsweise eingerichtet, eine am Verbindungsknoten 203 von dem Achsgenerator 17 erhaltene Wechselspannung in eine Gleichspannung umzuwandeln und an den Gleichspannungswandler 205 auszugeben. Die Gleichrichterschaltung 206 wird beispielsweise zumindest teilweise durch mehrere Dioden in Brückenschaltung (z.B. in Vollbrückenschaltung) gebildet.

Die Wechselrichterschaltung 206 ist beispielsweise eine bidirektionale Wechselrichterschaltung, die eine Dreiphasenwechselspannung in eine Gleichspannung und eine Gleichspannung in eine Dreiphasenwechselspannung umwandeln kann. Insbesondere ist die Wechselrichterschaltung eingerichtet, (1) eine am Verbindungsknoten 201 von dem öffentlichen elektrischen Energieversorgungsnetz 4 erhaltene Dreiphasenwechselspannung in eine Gleichspannung umzuwandeln und an den Gleichspannungswandler 205 auszugeben und (2) eine von dem Gleichspannungswandler 205 erhaltene Gleichspannung in eine Dreiphasenwechselspannung umzuwandeln und am Verbindungsknoten 201 auszugeben. Die Wechselrichterschaltung 206 wird beispielsweise zumindest teilweise durch einen Vierquadrantensteller und/oder mehrere Transistoren in Brückenschaltung gebildet.

Im Folgenden wird davon ausgegangen, dass die Gleichspannungswandlerschaltung 205 einen Transformator umfasst, so dass der Verbindungsknoten 201 von den Verbindungsknoten 202 und 203 galvanisch getrennt ist. Auch die Gleichspannungswandlerschaltung ist beispielsweise bidirektional ausgebildet, indem sie eine elektrische Energieübertragung sowohl von der Wechselrichterschaltung 204 zum Verbindungsknoten 202 als auch von dem Verbindungsknoten 202 zu der Wechselrichterschaltung 204 ermöglicht. Die Gleichspannungswandlerschaltung 205 ist insbesondere eingerichtet, (1) eine am Verbindungsknoten 202 von der Batterie 23 erhaltene Gleichspannung in eine andere Gleichspannung umzuwandeln (z.B. herabzusetzen) und an den Wechselrichter 204 auszugeben und (2) eine von dem Wechselrichter 204 erhaltene Gleichspannung in eine andere Gleichspannung umzuwandeln (z.B. heraufzusetzen) und am Verbindungsknoten 202 auszugeben und (3) eine von dem Gleichrichter erhaltene Gleichspannung in eine andere Gleichspannung umzuwandeln (z.B. heraufzusetzen oder herabzusetzen) und am Verbindungsknoten 202 und/oder an den Wechselrichter 204 auszugeben.

Die Steuereinheit 200 ist beispielsweise eingerichtet, die Funktion der Spannungswandlervorrichtung 20 entsprechend dem jeweiligen Betriebszustand der Transportkältemaschine 2 zu steuern. Zu diesem Zweck kann die Steuereinheit 200 beispielsweise die Wechselrichterschaltung 204 und/oder die Gleichspannungsschaltung 205 und/oder die Gleichrichterschaltung 206 der Spannungswandlervorrichtung 20 ansteuern, wie in Fig. 2 durch die Pfeile 207 angedeutet.

Zum Beispiel steuert die Steuereinheit 200 die Wechselrichterschaltung 204 und/oder die Gleichspannungsschaltung 205 und/oder die Gleichrichterschaltung 206 im ersten Betriebszustand der Transportkältemaschine 2 derart an, dass eine durch die Batterie 23 bereitgestellte und am Verbindungsknoten 202 erhaltene Gleichspannung in eine Dreiphasenwechselspannung zum Betreiben des elektrischen Motors umgewandelt und am Verbindungsknoten 201 ausgegeben wird.

Im zweiten Betriebszustand der Transportkältemaschine 2 kann die Steuereinheit 200 die Wechselrichterschaltung 204 und/oder die Gleichspannungsschaltung 205 und/oder die Gleichrichterschaltung 206 derart ansteuern, dass eine durch das externe elektrische Energieversorgungsnetz 4 bereitgestellte und am Verbindungsknoten 201 erhaltene Dreiphasenwechselspannung in eine Gleichspannung zum Laden der Batterie umgewandelt und am Verbindungsknoten 202 ausgegeben wird.

Ferner kann die Steuereinheit 200 im zweiten Betriebszustand das Beschränken der zum Laden der Batterie 23 verfügbaren elektrischen Leistung derart steuern, dass der elektrische Motor 21 die zum Betreiben des elektrischen Motors 21 notwendige elektrische Leistung erhält. Zum Beispiel steuert die Steuereinheit das Beschränken der zum Laden der Batterie 23 verfügbaren elektrische Leistung im zweiten Betriebsmodus, indem sie den Eingangsstrom am Verbindungsknoten 201 und/oder des Ausgangsstrom am Verbindungsknoten 202 beschränkt, z.B. indem sie die Wechselrichterschaltung 204 und/oder die Gleichspannungswandlerschaltung 205 entsprechend ansteuert. Dies ist beispielsweise vorteilhaft, um ein gleichzeitiges Betreiben des elektrischen Motors 21 und Laden der Batterie 23 ermöglichen zu können, ohne dass die Gefahr besteht, dass der Leistungsbedarf des elektrischen Motors 21 nicht gedeckt werden kann, weil ein zu großer Teil der zur Verfügung stehenden elektrischen Leistung zum Laden die Batterie 23 verwendet wird.

Um die zum Laden der Batterie 23 verfügbare elektrische Leistung im zweiten Betriebsmodus zu bestimmen, kann die Steuereinheit 200 beispielsweise mit dem elektrischen Motor 21, wie durch den Pfeil 208 angedeutet kommunizieren, um den elektrischen Leistungsbedarf des elektrischen Motors 21 zu erfassen. Die maximale durch das öffentliche elektrische Energieversorgungsnetz bereitstellbare elektrische Leistung (z.B. 11kW oder 22kW) ist beispielsweise in der Steuereinheit einprogrammiert (z.B. in einem Speicher der Steuereinheit 200 gespeichert), so dass die Steuereinheit die zum Laden der Batterie 23 verfügbare elektrische Leistung anschließend bestimmen kann, indem sie die Differenz der maximalen durch das öffentliche elektrische Energieversorgungsnetz bereitstellbaren elektrischen Leistung und des Leistungsbedarfs des elektrischen Motor 21 bestimmt.

Zum Beispiel ist die Steuereinheit 200 ferner eingerichtet, die Wechselrichterschaltung 204 und/oder die Gleichspannungsschaltung 205 und/oder die Gleichrichterschaltung 206 der Spannungswandlervorrichtung 20 im dritten Betriebszustand derart anzusteuern, dass eine durch den Achsgenerator 18 bereitgestellte und am Verbindungsknoten 203 erhaltene Wechselspannung in eine Gleichspannung zum Laden der Batterie 23 umgewandelt und am Verbindungsknoten 202 ausgegeben und/oder in eine Dreiphasenwechselspannung zum Betreiben des elektrischen Motors 21 umgewandelt und am Verbindungsknoten 201 ausgegeben wird.

Die Spannungswandlervorrichtung 20 ermöglicht somit das Betreiben der Transportkältemaschinen in den o.g. drei Betriebszuständen. Dabei übernimmt die Spannungswandlervorrichtung 20 im ersten Betriebszustand beispielsweise die Funktion eines Wechselrichters; und im zweiten und dritten Betriebszustand übernimmt sie beispielsweise die Funktion eines Ladegeräts für die Batterie 23. Die Betriebszustände schließen sich beispielsweise nicht gegenseitig aus.

Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Transportkältemaschine (2) zum Kühlen eines Laderaums (15) eines Nutzfahrzeugs (1), wobei ein elektrischer Energiespeicher (23) Teil des Nutzfahrzeugs ist, wobei der elektrische Energiespeicher (23) des Nutzfahrzeugs (1) zusätzlich Teil der Transportkältemaschine (2) oder extern von der Transportkältemaschine (2) ist, wobei die Transportkältemaschine (2) einen elektrischen Motor (21), einen Anschluss (24) für eine externe Energiequelle (4) und eine Spannungswandlervorrichtung (20) umfasst, wobei elektrische Energie zum Betreiben des elektrischen Motors (21) in einem ersten Betriebszustand der Transportkältemaschine (2) durch den elektrischen Energiespeicher (23) des Nutzfahrzeugs (1) bereitgestellt wird, wobei elektrische Energie zum Betreiben des elektrischen Motors (21) und zum Laden des elektrischen Energiespeichers (23) in einem zweiten Betriebszustand der Transportkältemaschine (2) durch die externe elektrische Energiequelle (4) bereitgestellt wird, die an dem Anschluss (24) angeschlossen ist, wobei der Anschluss (24) derart mit dem elektrischen Motor (21) elektrisch verbunden ist, dass der elektrische Motor (21) im zweiten Betriebszustand ohne eine durch die Spannungswandlervorrichtung (20) umgewandelte Spannung betreibbar ist, und wobei die Spannungswandlervorrichtung eingerichtet ist:
- in dem ersten Betriebszustand der Transportkältemaschine (2) eine durch den elektrischen Energiespeicher (23) des Nutzfahrzeugs (1) bereitgestellte Gleichspannung in eine Dreiphasenwechselspannung zum Betreiben des elektrischen Motors (21) umzuwandeln,
- in dem zweiten Betriebszustand der Transportkältemaschine (2) eine durch die externe elektrische Energiequelle (4) bereitgestellte Dreiphasenwechselspannung in eine Gleichspannung zum Laden des elektrischen Energiespeichers (23) umzuwandeln und die zum Laden des elektrischen Energiespeichers (23) verfügbare elektrische Leistung derart zu beschränken, dass der elektrische Motor (21) die zum Betreiben des elektrischen Motors (21) notwendige elektrische Leistung erhält.

2. Transportkältemaschine (2) nach Anspruch 1, wobei die in dem zweiten Betriebszustand der Transportkältemaschine (2) durch die externe elektrische Energiequelle (4) bereitgestellte Dreiphasenwechselspannung sowohl über die Spannungswandlervorrichtung und den elektrischen Energiespeicher (23) als auch über den elektrischen Motor (21) abfällt, und/oder wobei der Anschluss (24) derart mit dem elektrischen Motor (21) elektrisch verbunden ist, dass die durch die externe elektrische Energiequelle in dem zweiten Betriebszustand der Transportkältemaschine bereitgestellte Dreiphasenwechselspannung zum Betreiben des elektrischen Motors nicht durch die Spannungswandlervorrichtung umgewandelt wird, so dass der elektrische Motor (21) im zweiten Betriebszustand ohne eine durch die Spannungswandlervorrichtung (20) umgewandelte Spannung betreibbar ist.

3. Transportkältemaschine (2) nach einem der Ansprüche 1 und 2, wobei die Spannungswandlervorrichtung einen ersten Verbindungsknoten zum Herstellen einer elektrischen Verbindung mit dem elektrischen Motor (21) und/oder der externen elektrischen Energiequelle und einen zweiten Verbindungsknoten zum Herstellen einer elektrischen Verbindung mit dem elektrischen Energiespeicher (23) umfasst.

4. Transportkältemaschine (2) nach Anspruch 3, wobei der erste Verbindungsknoten der Spannungswandlervorrichtung und der zweite Verbindungsknoten der Spannungswandlervorrichtung galvanisch getrennt sind.

5. Transportkältemaschine (2) nach einem der Ansprüche 3 und 4, wobei die Spannungswandlervorrichtung eine Wechselrichterschaltung und eine Gleichspannungswandlerschaltung umfasst, und wobei die Wechselrichterschaltung und die Gleichspannungswandlerschaltung zwischen dem ersten Verbindungsknoten und dem zweiten Verbindungsknoten angeordnet sind.

6. Transportkältemaschine (2) nach einem der Ansprüche 3 bis 5, wobei die Spannungswandlervorrichtung eingerichtet ist:
- in dem ersten Betriebszustand die durch den elektrischen Energiespeicher (23) des Nutzfahrzeugs (1) bereitgestellte Gleichspannung an dem zweiten Verbindungsknoten zu erhalten und die Dreiphasenwechselspannung zum Betreiben des elektrischen Motors (21) an dem ersten Verbindungsknoten auszugeben,
- in dem zweiten Betriebszustand die durch die externe elektrischen Energiequelle bereitgestellte Dreiphasenwechselspannung an dem ersten Verbindungsknoten zu erhalten und die Gleichspannung zum Laden des elektrischen Energiespeichers (23) an dem zweiten Verbindungsknoten auszugeben.

7. Transportkältemaschine (2) nach einem der Ansprüche 3 bis 6, wobei elektrische Energie zum Betreiben des elektrischen Motors (21) und/oder zum Laden des elektrischen Energiespeichers (23) in einem dritten Betriebszustand der Transportkältemaschine (2) durch einen elektrischen Generator des Nutzfahrzeugs (1) bereitgestellt wird, und wobei die Spannungswandlervorrichtung eingerichtet ist:
- in dem dritten Betriebszustand der Transportkältemaschine (2) eine durch den elektrischen Generator des Nutzfahrzeugs (1) bereitgestellte Wechselspannung in eine Gleichspannung zum Laden des elektrischen Energiespeichers (23) und/oder eine Dreiphasenwechselspannung zum Betreiben des elektrischen Motors (21) umzuwandeln.

8. Transportkältemaschine (2) nach Anspruch 7, wobei die Spannungswandlervorrichtung einen dritten Verbindungsknoten zum Herstellen einer elektrischen Verbindung mit dem elektrischen Generator des Nutzfahrzeugs (1) umfasst.

9. Transportkältemaschine (2) nach Anspruch 8, wobei die Spannungswandlervorrichtung eingerichtet ist:
- in dem dritten Betriebszustand die durch den elektrischen Generator des Nutzfahrzeugs (1) bereitgestellte Wechselspannung an dem ersten Verbindungsknoten zu erhalten und die Gleichspannung zum Laden des elektrischen Energiespeichers (23) an dem zweiten Verbindungsknoten und/oder die Dreiphasenwechselspannung zum Betreiben des elektrischen Motors (21) an dem ersten Verbindungsknoten auszugeben.

10. Transportkältemaschine (2) nach einem der Ansprüche 8 und 9, wobei die Spannungswandlervorrichtung eine Gleichrichterschaltung umfasst, und wobei die Gleichrichterschaltung zwischen dem zweiten Verbindungsknoten und dem dritten Verbindungsknoten angeordnet ist.

11. Transportkältemaschine (2) nach einem der Ansprüche 1 bis 10, wobei die externe elektrische Energiequelle (4) ein elektrisches Energieversorgungsnetz (4) ist.

12. Transportkältemaschine (2) nach einem der Ansprüche 1 bis 11, wobei der elektrische Energiespeicher (23) des Nutzfahrzeugs (1) eine aufladbare Batterie ist.

13. Transportkältemaschine (2) nach einem der Ansprüche 1 bis 12, wobei die Transportkältemaschine (2) ferner zumindest eine der folgenden Komponenten umfasst:
- einen von dem elektrischen Motor (21) angetriebenen Verdichter (220),
- einen Kondensator (221),
- eine Drosseleinrichtung (222), und
- einen Wärmetauscher (223).

## Claims

1. Transport refrigeration machine (2) for cooling a cargo space (15) of a utility vehicle (1), wherein an electric energy storage device (23) is part of the utility vehicle, wherein the electric energy storage device (23) of the utility vehicle (1) is additionally part of the transport refrigeration machine (2) or external to the transport refrigeration machine (2), wherein the transport refrigeration machine (2) comprises an electric motor (21), a connection (24) for an external energy source (4) and a voltage conversion device (20), wherein electrical energy for operating the electrical motor (21) in a first operating state of the transport refrigeration machine (2) is provided by the electric energy storage device (23) of the utility vehicle (1), wherein electrical energy for operating the electric motor (21) and for charging the electric energy storage device (23) in a second operating state of the transport refrigeration machine (2) is provided by the external electrical energy source (4) which is connected to the connection (24), wherein the Connection (24) is electrically connected to the electric motor (21) in such a way that the electric motor (21) can be operated in the second operating state without a voltage converted by the voltage conversion device (20), and wherein the voltage conversion device is configured:
- in the first operating state of the transport refrigeration machine (2), to convert a Direct voltage provided by the electric energy storage device (23) of the utility vehicle (1) into a three-phase alternating voltage for operating the electric motor (21),
- in the second operating state of the transport refrigeration machine (2), to convert a three-phase alternating voltage provided by the external electrical energy source (4) into a Direct voltage for charging the electric energy storage device (23) and to limit the electrical power available for charging the electric energy storage device (23) in such a way that the electric motor (21) receives the electrical power necessary for operating the electric motor (21).

2. Transport refrigeration machine (2) according to claim 1, wherein the three-phase alternating voltage provided by the external electrical energy source (4) in the second operating state of the transport refrigeration machine (2) is dropped both via the voltage conversion device and the electric energy storage device (23) and via the electric motor (21), and/or wherein the connection (24) is electrically connected to the electric motor (21) in such a way, that the three-phase alternating voltage provided by the external electrical energy source in the second operating state of the transport refrigeration machine for operating the electric motor is not converted by the voltage conversion device, so that the electric motor (21) can be operated in the second operating state without a voltage converted by the voltage conversion device (20).

3. Transport refrigeration machine (2) according to any one of claims 1 and 2, wherein the voltage conversion device comprises a first connection node for establishing an electrical connection with the electric motor (21) and/or the external electrical energy source and a second connection node for establishing an electrical connection with the electric energy storage device (23).

4. Transport refrigeration machine (2) according to claim 3, wherein the first connection node of the voltage conversion device and the second connection node of the voltage conversion device are galvanically separated.

5. Transport refrigeration machine (2) according to any one of claims 3 and 4, wherein the voltage conversion device comprises an inverter circuit and a DC-DC converter circuit, and wherein the inverter circuit and the DC-DC converter circuit are arranged between the first connection node and the second connection node.

6. Transport refrigeration machine (2) according to any one of claims 3 to 5,
wherein the voltage conversion device is configured:
- in the first operating state, to receive the Direct voltage provided by the electric energy storage device (23) of the utility vehicle (1) at the second connection node and to output the three-phase Alternating voltage for operating the electric motor (21) at the first connection node,
- in the second operating state, to receive the three-phase alternating voltage provided by the external electric power source at the first connection node and to output the Direct voltage for charging the electric energy storage device (23) at the second connection node.

7. Transport refrigeration machine (2) according to any one of claims 3 to 6,
wherein electric power for operating the electric motor (21) and/or for charging the electric energy storage device (23) is provided by an electric generator of the utility vehicle (1) in a third operating state of the transport refrigeration machine (2), and wherein the voltage conversion device is configured:
- in the third operating state of the transport refrigeration machine (2), to convert an alternating voltage provided by the electric generator of the utility vehicle (1) into a direct voltage for charging the electric energy storage device (23) and/or a three-phase alternating voltage for operating the electric motor (21).

8. Transport refrigeration machine (2) according to claim 7, wherein the voltage conversion device comprises a third connection node for establishing an electrical connection with the electrical generator of the utility vehicle (1).

9. Transport refrigeration machine (2) according to claim 8, wherein the voltage conversion device is configured:
- in the third operating state, to receive the Alternating voltage provided by the electric generator of the utility vehicle (1) at the first connection node and to output the Direct voltage for charging the electric energy storage device (23) at the second connection node and/or the three-phase Alternating voltage for operating the electric motor (21) at the first connection node.

10. Transport refrigeration machine (2) according to any one of claims 8 and 9, wherein the voltage conversion device comprises a rectifier circuit, and wherein the rectifier circuit is arranged between the second connection node and the third connection node.

11. Transport refrigeration machine (2) according to any one of claims 1 to 10, wherein the external electrical power source (4) is an electrical power supply network (4).

12. Transport refrigeration machine (2) according to any one of claims 1 to 11, wherein the electric energy storage device (23) of the utility vehicle (1) is a rechargeable battery.

13. Transport refrigeration machine (2) according to any one of claims 1 to 12,
wherein the transport refrigeration machine (2) further comprises at least one of the following components:
- a compressor (220) driven by the electric motor (21),
- a condenser (221)
- a throttling device (222), and
- a heat exchanger (223).

## Revendications

1. Machine frigorifique de transport (2) pour refroidir un espace de chargement (15) d'un véhicule utilitaire (1), un dispositif de stockage d'énergie électrique (23) faisant partie du véhicule utilitaire, le dispositif de stockage d'énergie électrique (23) du véhicule utilitaire (1) faisant en outre partie de la machine frigorifique de transport (2) ou étant externe à la machine frigorifique de transport (2), la machine frigorifique de transport (2) comprenant un moteur électrique (21), un raccordement (24) pour une source d'énergie externe (4) et un dispositif de conversion de tension (20), de l'énergie électrique pour faire fonctionner le moteur électrique (21) étant fournie, dans un premier état de fonctionnement de la machine frigorifique de transport (2), par le dispositif de stockage d'énergie électrique (23) du véhicule utilitaire (1), de l'énergie électrique pour faire fonctionner le moteur électrique (21) et pour charger le dispositif de stockage d'énergie électrique (23) étant fournie, dans un deuxième état de fonctionnement de la machine frigorifique de transport (2), par la source d'énergie électrique externe (4) qui est raccordée au raccordement (24), le raccordement (24) étant relié électriquement au moteur électrique (21) de telle sorte que le moteur électrique (21) puisse fonctionner dans le deuxième état de fonctionnement sans une tension convertie par le dispositif de conversion de tension (20), et dans lequel le dispositif de conversion de tension est configuré pour:
- dans le premier état de fonctionnement de la machine frigorifique de transport (2), convertir une tension continue fournie par le dispositif de stockage d'énergie électrique (23) du véhicule utilitaire (1) en une tension alternative triphasée pour faire fonctionner le moteur électrique (21),
- dans le deuxième état de fonctionnement de la machine frigorifique de transport (2), convertir une tension alternative triphasée fournie par la source d'énergie électrique externe (4) en une tension continue pour charger le dispositif de stockage d'énergie électrique (23) et limiter la puissance électrique disponible pour charger le dispositif de stockage d'énergie électrique (23) de telle sorte que le moteur électrique (21) reçoive la puissance électrique nécessaire pour faire fonctionner le moteur électrique (21).

2. Machine frigorifique de transport (2) selon la revendication 1, dans laquelle la tension alternative triphasée fournie par la source d'énergie électrique externe (4) dans le deuxième état de fonctionnement de la machine frigorifique de transport (2) chute aussi bien par le dispositif de conversion de tension et le dispositif de stockage d'énergie électrique (23) que par le moteur électrique (21), et/ou dans laquelle le raccordement (24) est relié électriquement au moteur électrique (21) de telle sorte que la tension alternative triphasée fournie par la source d'énergie électrique externe dans le deuxième état de fonctionnement de la machine frigorifique de transport pour faire fonctionner le moteur électrique n'est pas convertie par le dispositif de conversion de tension, de sorte que le moteur électrique (21) peut fonctionner dans le deuxième état de fonctionnement sans une tension convertie par le dispositif de conversion de tension (20).

3. Machine frigorifique de transport (2) selon l'une des revendications 1 et 2, dans laquelle le dispositif de conversion de tension comprend un premier noeud de connexion pour établir une connexion électrique avec le moteur électrique (21) et/ou la source d'énergie électrique externe et un deuxième noeud de connexion pour établir une connexion électrique avec le dispositif de stockage d'énergie électrique (23).

4. Machine frigorifique de transport (2) selon la revendication 3, dans laquelle le premier nœud de connexion du dispositif de conversion de tension et le deuxième noeud de connexion du dispositif de conversion de tension sont séparés galvaniquement.

5. Machine frigorifique de transport (2) selon l'une des revendications 3 et 4, dans laquelle le dispositif de conversion de tension comprend un circuit onduleur et un circuit convertisseur de tension continue, et dans laquelle le circuit onduleur et le circuit convertisseur de tension continue sont disposés entre le premier noeud de connexion et le deuxième noeud de connexion.

6. Machine frigorifique de transport (2) selon l'une des revendications 3 à 5, dans laquelle le dispositif de conversion de tension est configuré pour :
- dans le premier état de fonctionnement, recevoir la tension continue fournie par le dispositif de stockage d'énergie électrique (23) du véhicule utilitaire (1) au niveau du deuxième noeud de connexion et délivrer la tension alternative triphasée pour faire fonctionner le moteur électrique (21) au niveau du premier noeud de connexion,
- dans le deuxième état de fonctionnement, obtenir la tension alternative triphasée fournie par la source d'énergie électrique externe au niveau du premier noeud de connexion et délivrer la tension continue pour charger le dispositif de stockage d'énergie électrique (23) au niveau du deuxième noeud de connexion.

7. Machine frigorifique de transport (2) selon l'une des revendications 3 à 6, dans laquelle l'énergie électrique pour faire fonctionner le moteur électrique (21) et/ou pour charger le dispositif de stockage d'énergie électrique (23) est fournie par un générateur électrique du véhicule utilitaire (1) dans un troisième état de fonctionnement de la machine frigorifique de transport (2), et dans laquelle le dispositif de conversion de tension est configuré pour
- convertir, dans le troisième état de fonctionnement de la machine frigorifique de transport (2), une tension alternative fournie par le générateur électrique du véhicule utilitaire (1) en une tension continue pour charger le dispositif de stockage d'énergie électrique (23) et/ou en une tension alternative triphasée pour faire fonctionner le moteur électrique (21).

8. Machine frigorifique de transport (2) selon la revendication 7, dans laquelle le dispositif de conversion de tension comprend un troisième nœud de connexion pour établir une connexion électrique avec le générateur électrique du véhicule utilitaire (1).

9. Machine frigorifique de transport (2) selon la revendication 8, dans laquelle le dispositif de conversion de tension est configuré pour :
- dans le troisième état de fonctionnement, recevoir la tension alternative fournie par le générateur électrique du véhicule utilitaire (1) au niveau du premier noeud de connexion et délivrer la tension continue pour charger le dispositif de stockage d'énergie électrique (23) au niveau du deuxième noeud de connexion et/ou la tension alternative triphasée pour faire fonctionner le moteur électrique (21) au niveau du premier noeud de connexion.

10. Machine frigorifique de transport (2) selon l'une des revendications 8 et 9, dans laquelle le dispositif de conversion de tension comprend un circuit redresseur, et dans laquelle le circuit redresseur est disposé entre le deuxième noeud de connexion et le troisième naeud de connexion.

11. Machine frigorifique de transport (2) selon l'une des revendications 1 à 10, dans laquelle la source d'énergie électrique externe (4) est un réseau d'alimentation en énergie électrique (4).

12. Machine frigorifique de transport (2) selon l'une des revendications 1 à 11, dans laquelle le dispositif de stockage d'énergie électrique (23) du véhicule utilitaire (1) est une batterie rechargeable.

13. Machine frigorifique de transport (2) selon l'une des revendications 1 à 12, dans laquelle la machine frigorifique de transport (2) comprend en outre au moins l'un des éléments suivants :
- un compresseur (220) entraîné par le moteur électrique (21),
- un condenseur (221),
- un dispositif d'étranglement (222), et
- un échangeur de chaleur (223).
